# EUROPEAN PATENT SPECIFICATION

(11) **EP 1 291 365 B1**
(45) Date of publication and mention of the grant of the patent: **05.10.2005**
(21) Application number: 02079474.9
(22) Date of filing: 27.01.1998
(51) Int. Cl.: C08F 4/642, C08F 10/00

(54) **Selective activity of metallocene-type catalyst for isotactic poly-alpha-olefin production**
Selektive Wirkung von Metallocen-Katalysatoren für die Herstellung von isotaktischen Polyolefinen
Activité sélective de catalyseurs à base de métallocènes pour la production de polyoléfines isotactiques

(30) Priority: 30.01.1997 US 790672
(43) Date of publication of application: 12.03.2003
(62) Divisional of application: 98101363.4
(73) Proprietor: FINA TECHNOLOGY, INC., Texas 77032 (US)
(72) Inventor: Shamshoum, Edwar S., Gibsonia, Pennsylvania 15044 (US); Lopez, Margarito, Pasadena, Texas 77052 (US); Harris, Theodore G., Houston, Texas 77009 (US)
(74) Representative: Roufosse, Micheline C.

(56) References cited:
- EP-A- 0 284 707
- EP-A- 0 287 666
- DE-A- 4 139 263
- DE-C- 4 344 672
- US-A- 5 393 851
- PATENT ABSTRACTS OF JAPAN vol. 1997, no. 01, 31 January 1997 (1997-01-31) & JP 08 245714 A (MITSUI PETROCHEM IND LTD), 24 September 1996 (1996-09-24)
- MICHIELS W ET AL: "MIXED COCATALYST SYSTEMS IN METALLOCENE ETHYLENE POLYMERIZATION" MACROMOLECULAR SYMPOSIA, WILEY VCH, WEINHEIM, DE, vol. 97, 1 July 1995 (1995-07-01), pages 171-183, XP000542002 ISSN: 1022-1360

## Description

### Field of the Invention

This invention relates to the use of metallocene molecules, in combination with appropriate cocatalyst, activator, agent for aging, or combinations thereof for the production of differentiated tacticity polymers, notably poly-α-olefins, particularly polypropylene.

### Background of the Invention

It is known that various factors affect the catalytic ability of the various metallocenes, cocatalysts, activators, and combinations available. We have found that the metallocene/activator combination, notably with supported catalyst systems, for isospecific polymer production benefits from unique pre-treatment leading to enhancement of catalyst activity. We have noted, particularly, that the supported isospecific catalyst which is capable of producing high melt flow products, products greater than about 10 dg/min, will provide higher polymer productivity when it is used very soon after activation with alkyl aluminum; the shorter the digestion time, the higher the catalyst productivity as measured by polymer production. However, isospecific metallocenes which are capable of producing lower melt flow resins, those products less than about 10 dg/min, tend to retain their activity for longer periods after activation. We have also found that the type of activator affects the activity of the catalyst as well as its aging requirements.

Catalyst productivity is of high interest to the producer of polymers. Simply put, the catalyst system is the most expensive raw material in the polymer production process; doubling the productivity of the catalyst effectively cuts the cost of that most expensive component in half. This is an enticing carrot before any polymer producer.

U.S. 5,393,851, issued to Ewen February 28, 1995, describes addition of an oleaginous solvent based solution of alumoxane, aluminum alkyl, or combinations of both to a previously-made concentrated stock solution of metallocene/alumoxane catalyst solution to provide aluminum necessary to enhance the catalytic reaction and to optimize the aluminum to metal ratio.

U.S. 5,258,475, issued to Kissin November 2, 1993, describes addition of mixture of trimethylaluminum (TMA) and an organotin to precursors of metallocenes. Such addition accomplishes catalyst activation. It is particularly noted that such activation may be useful for up to about 100 hours prior to catalyst introduction into the polymerization medium.

U.S. 5,241,025, issued August 31, 1993 to Hlatky et al. describes a catalyst system which comprises a Group III-A (Group 13) element compound for improving the productivity of an olefin polymerization catalyst which is the reaction product of a Group IV-B (Group 4) transition metal and an ionic activator compound which will irreversibly react with at least one ligand contained in the Group IV-B metal compound.

U.S. 5,153,157, issued October 6, 1992 to Hlatky et al., describes the combination of metallocene catalysts and ionic activators. This combination provides an active catalyst system for polymerization of alpha-olefins.

U.S. 5,145,819 issued September 8, 1992 to Winter et al. describes 2-substituted disindenylmetallocenes (sic), process for their preparation, and their use as catalysts in the polymerization of olefins. While this invention describes the use of 2-substituted bisindenyl metallocenes with methylalumoxane cocatalyst, together forming the catalyst system, for polymerization of olefins, no mention is made of activation of the catalyst system. No comment is made relative to timing of polymerization after formation of the catalyst system.

U.S. 4,933,403, issued June 12, 1990 to Kaminsky et al. describes a process for the preparation of optically active polyolefins, particularly isotactic polypropylene. This invention is exemplified by polymerization with optically active ethylene-bis-(4,5,6,7-tetrahydroindenyl)-zirconium dichloride (metallocene) and trimethylalumoxane.

WO 9614151, as published 17 May 1996, describes a silica supported catalyst system for alpha-olefin polymerization of a zirconium metallocene, dibutylmagnesium, 1-butanol, titanium tetrachloride and methylalumoxane. Use of such catalyst produces polyethylene with a bimodal molecular weight distribution.

WO 9613530, as published 9 May 1996, describes a catalyst system for olefin polymerization providing a supported mixed metallocene/non-metallocene catalyst. Such catalyst system provides broad molecular weight distributions.

### Summary of the Invention

Our invention provides, at least, high activity supported metallocene/alumoxane catalyst system for production of isotactic poly-α-olefin, particularly isotactic polypropylene (iPP). Also provided is means of producing isotactic poly-α-olefin at high rates and means of using metallocene/alumoxane catalyst system useful for producing isotactic poly-α-olefin during the system's period of highest activity.

### Brief Description of the Drawings

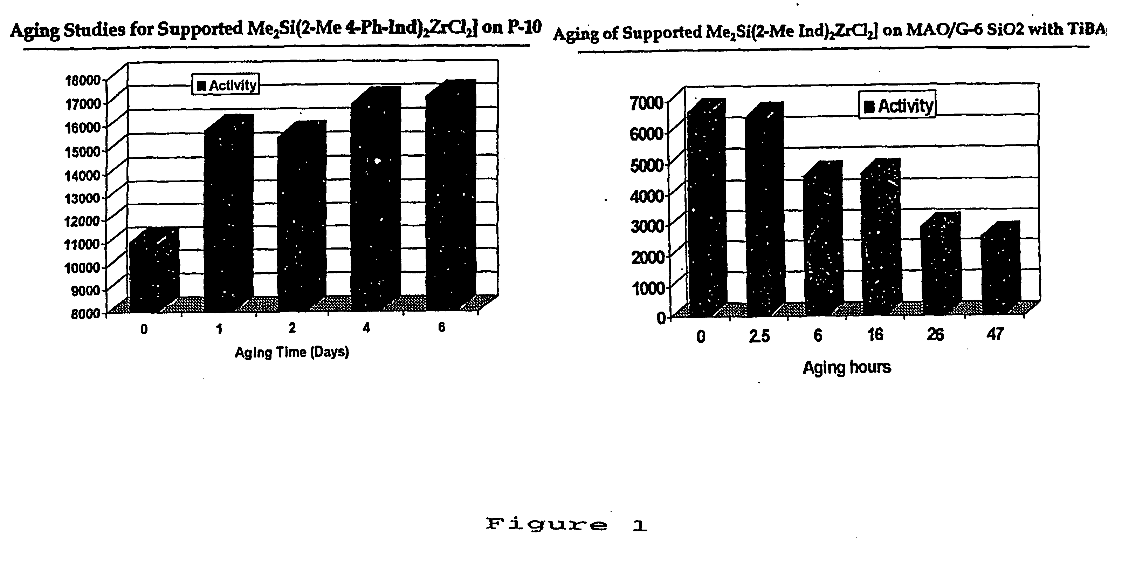

Figure 1 graphically displays isospecific catalyst system productivity plotted against aging or activation time, as beginning with introduction of aluminum alkyl into the catalyst system.

### Detailed Description

We provide embodiments of our invention in which metallocene\activator catalyst systems are treated to yield improved catalyst productivity. We also provide embodiments of our invention for production of isotactic polyolefin, especially poly-α-olefin, particularly isotactic polypropylene (IPP), at notably high rates.

An embodiment provides use of catalyst system comprising metallocene-type catalyst capable of producing isotactic poly α-olefin; cocatalyst or catalyst activator; and, optionally, catalyst system support; such system being activated by contact with alkyl aluminum; such that the activated catalyst system is used for polymerization within about six hours through about fourteen days of its activation for producing polymers of melt flow equal to or less than about eight dg/min.

Another embodiment provides process for polymerizing isotactic poly-α-olefin comprising the steps of:
A. Providing suitable catalyst system comprising metallocene-type catalyst capable of producing isotactic poly α-olefin; cocatalyst or catalyst activator; and, optionally, catalyst system support;
B. Activating suitable catalyst system by contacting with alkyl aluminum such that the activated catalyst system is used for polymerization within about six hours through about fourteen days of its activation for producing polymers of melt flow equal to or less than about eight dg/min;
C. Polymerizing suitable monomer, using activated catalyst system, to obtain desired isotactic polyolefin; and
D. Separating desired isotactic polyolefin.

A third embodiment provides process for polymerizing isotactic polypropylene comprising the steps of:
A. Providing catalyst system comprising:
   1) dimethylsilyl bis-2-methylindenyl zirconium dichloride and methylalumoxane, or
   2) dimethylsilyl bis-2-methyl, 4-phenylindenyl zirconium dichloride and methylalumoxane,
   supported on particles comprising silica;
B. Activating catalyst system by contacting with triisobutylaluminum;
C. Isotactically polymerizing propylene monomer using activated catalyst system within, respectively according to step A.
   within about six hours through about fourteen days of its activation for producing polymers of melt flow equal to or less than about eight dg/min; and
D. Collecting desired isotactic polypropylene.

While various factors affect the suitable use of catalyst capable of producing isotactic poly α-olefin, or polymerization of poly α-olefin particularly polypropylene, to provide product in the desired melt flow ranges, we have found that desired product will optimally be produced through use of temperatures in the range of about 50°C through about 70°C, particularly in the range of about 55°C through about 65°C, and especially at about 62°C; and with hydrogen concentration in the range of about zero through about 0.1 mole%, particularly in the range of up to about 0.05 mole%, and especially within the range of about zero through about 0.015 mole%. Such conditions of temperature and concentration are particularly useful in liquid and bulk-phase polymerization systems but the principles of optimal use or production are transferable to other polymerization systems.

Numerous metallocene-type catalysts are now well known in the art. Some of them are exemplified by U.S. 5,241,025; U.S. 5,153,157; U.S. 4,933,403; and U.S. 5,145,819. Useful metallocenes for this particular invention include those with a bridging group between the two mono or polynuclear structures which include at least a cyclopentadienyl ring bonded to the metal of the catalyst molecule. Such bridges usefully provide stereorigidity to the metallocene molecule by preventing free rotation of the cyclopentadienyl ring-bearing structure. These bridging groups will preferably also serve to control the accessibility of the active polymerization site by opening or closing the angle between the two cyclopentadienyl-ring-bearing structures or ligands (Cp ligands). The bridge may also usefully block or open the area around the bridge itself by providing bulky or minimally-sized side groups pendant from the actual bridge. The bridges may usefully include between about one and about four atoms making up the actual bridge structure between the Cp ligands. Such bridges may include carbon atoms which may be contributed by alkyl or alkylene groups, as well as silicon atoms which may be contributed by silylene, silyl, and other homologous groups such as those which are germanium- or even tin- containing. Various side groups may be included with the bridging ligand serving to block, by bulky side groups, or open, by small side groups, the area near the actual bridging path. Useful such bridging groups include ethylene, silylene, silyl, germyl, and germylene. Particularly useful bridges are found in the RR'Si group in which R and R' may be the same or different and either may be phenyl, propyl, ethyl, methyl, or combinations thereof. In light of availability as well as excellent functioning, the dimethylsilyl group has been found to be notably beneficial.

In propagating isotactic polyolefins, it is useful to provide a substituent pendant from the 2- position of the cyclopentadienyl ring-containing ligand (Cp ligand). 2-alkyl substitutions on the cyclopentadienyl rings usefully assist isotactic propagation of the poly-α-olefins. Such substituent may be small or bulky and particularly may be straight, branched, substituted alkyl groups, or their combinations, cycloakyl groups, or aryl groups including phenyl and tolyl. Particularly useful substituents at this position for the practice of this invention are t-butyl, isopropyl, ethyl, and methyl radicals. Based on experience and in light of availability, the 2-methyl substituted indenyl is notably useful.

Further useful species of substituted bis-indenyl metallocenes include those which are substituted at the 2- and 4- positions. Substituents at the 2- position remain as previously described while those at the 4- position are bulky alkyl groups and aromatic radicals including phenyl, tolyl, other phenyl-derived groups, naphthyl, fluorenyl, and their combinations. Based on experience and availability, particularly useful results are available with the 2-methyl, 4-phenyl indenyl metallocenes.

Useful metals to serve as the central coordination point and provide the active polymerization site for the metallocene molecule are those in Groups 3, 4, and 5 of the Periodic Table of the Elements. Choice of the metal atom will require consideration of the atom size. It may be possible, for example that a larger diameter metal atom will provide easier or more open access to the active polymerization site while a smaller diameter metal atom may be less active, it may provide a lower error rate in producing isotactic polymer. Those metals found in group 4, particularly zirconium, are notably useful in the practice of this invention.

Within the discussion of our invention, the metallocene chlorides, generally the dichlorides will be discussed and exemplified. It is to be understood that other halogenated metallocenes as well as alkylated species are also perfectly functional in the practice of our invention and they are considered as effectively equivalent to the chlorides. For example, metallocene dibromides and the alkylated homologues such as dimethyl and diethyl metallocenes will find beneficial use in the practice of our invention.

The cocatalyst or activator portion of the catalyst system may be a bulky labile ionic activator which may be irreversibly reacted with catalyst, alumoxane, or combinations thereof. Many of these activators are now well-known in the art and some are described in U.S. 5,241,025 and U.S. 5,153,157, or alumoxane. A particularly useful activator or cocatalyst for the practice of this invention is methylalumoxane but others including ethylalumoxane and isobutylalumoxane, their combinations, or their combinations with methylalumoxane may be used.

For the practice of this invention, the catalyst system may be optionally supported. Generally such supported catalyst systems are preferred since they are more easily handled. Usefully the support will be inert in the polymerization reaction, will have large effective surface area, and will hold the catalyst system, or at least one component thereof, to its surface. Numerous such supports are now well-known in the art including zirconia, alumina, silica, titania, maleic anhydride grafted polypropylene, starch, and other polymer such as p-hydroxypolystyrene, as well as their combinations. A notably useful support in the practice of this invention is silica.

Alkyl aluminums, or aluminum alkyls, provide catalyst system activation prior to use of the system. Useful system activators include trimethylaluminum (TMA), triethylaluminum (TEAl), dialkyl aluminum halides including diethyl aluminum chloride or bromide or dimethyl aluminum chloride or bromide, and others. Particularly useful in the practice of this invention is tri-isobutylaluminum (TiBAl) and tri-n-octyl aluminum (TNOAl) for use with Me₂Si(2-Me-Ind)₂ZrCl₂ and TiBAl, TNOAl, and TEAl for Me₂Si(2-Me-, 4-Ph-, Ind)₂ZrCl₂.

### Examples

Metallocene/activator or cocatalyst catalyst systems for this series of experiments were produced and supported by providing 40 g silica which were transferred into a three-neck 1.0 1 round-bottom flask under dry nitrogen purge. Some useful silica-based supporting media may be selected from P-10, Q-10, G-6, silica-titania and silica-alumina as available from Fuji-sylisia as well as H-121 and H-31 as available from Asahi Glass. Preferably the support used will have small and uniform particle sizes with high effective surface area and high pore volume. For examples 1 - 6, G-6 was used as the supporting medium, while P-10 silica was used as the supporting medium for examples 7 - 11. Some results have been seen in our experimentation suggesting that the ratio of co-catalyst/activator to silica affects final catalytic activity. Our work demonstrates that the trends regarding aging-time sensitivity are similar with catalysts of this type and varying support media. The greatest possible catalytic activity, however, may not necessarily be attained in the absence of determination of the best co-catalyst/support ratio. In these cases this will be the MAO/silica-based support ratio whose optimum may or may not have been fully determined for each of the support media used in our experimental evaluations.

The flask was equipped with a reflux condenser capped with a gas inlet adapter, a 125 ml pressure-equalized addition funnel capped with a rubber septum, and the last neck was capped with a rubber septum. The silica-based support was slurried in 250 ml toluene at room temperature. 135.2 ml of a 30% methylalumoxane (MAO) solution in toluene at room temperature was slowly introduced into the flask. The resulting reaction is exothermic and releases methane as a by-product. The reaction mixture was then stirred at reflux for four hours under dry argon. After four hours, the reflux and stirring was stopped and the contents of the flask were allowed to settle while cooling to room temperature. The supernatant was removed and the slurry was washed four times with 100 ml aliquots of toluene at room temperature. The resulting solid was dried at 70°C under vacuum for three hours. The MAO/support was recovered as an off-white free-flowing solid.

About 50 ml dry toluene was added to 5.0 g of the MAO/support in a 500 ml single-neck, side-arm, round-bottomed flask and the mixture was stirred at room temperature. A total loading of isospecific metallocene, dimethylsilylbis-2-methylindenyl zirconium dichloride recognized as being useful for producing isotactic polypropylene (IPP) with reasonable molecular weights, solid was slurried in toluene and added to the MAO/silica toluene slurry at room temperature. The mixture was stirred at room temperature for one hour under argon. The reaction mixture was left to settle at room temperature for fifteen minutes at which time the supernatant was removed. The solids were dried at room temperature under vacuum for one hour.

A master batch slurry of 180 mg of the supported metallocene, 8.3 ml mineral oil and 1.7 ml of 25% triisobutylaluminum (TiBAl) in hexanes was prepared at room temperature (about 25°C). This master batch was then aged at room temperature for varying periods of time prior to each polymerization. A 1.0 ml aliquot of the master slurry was used for each polymerization of isotactic, poly-α-olefin polymerization. Polymerizations were conducted in a 2.0 liter laboratory-scale autoclave (Zipperclave) liquid-phase stainless-steel batch reactor. The reactor was clean, dry, and had been thoroughly purged with dry nitrogen. The autoclave was then charged with 1.4 liters of liquid propylene and 16 mmoles of gaseous hydrogen. A 36 mg portion of catalyst and 77 mg of TEAL were mixed in 1 ml mineral oil and placed in a stainless steel 100 ml bomb. The mineral oil slurry was precontacted with a small amount of dry propylene at room temperature for approximately five seconds to allow some prepolymerization prior to charging into the reactor. The mixture was then heated to 60°C, stirred at approximately 1000 rpm, and maintained for 60 minutes. At the end of this time polymerization was terminated by rapidly venting the reactor of unreacted monomer. The resulting polymer was then separated followed by being dried at 80°C.

### Examples 1 - 6

For this series of polymerizations, the master batch was aged for twelve minutes, two and one-half hours, six hours, fifteen and one-half hours, twenty-six hours, and forty-eight hours, respectively, prior to each polymerization run.

Aging time begins upon introduction of TiBAl in mineral oil into the supported catalyst system slurry. The results of this series are presented in Table 1 below.

**Table 1**

| Example # | 1 | 2 | 3 | 4 | 5 | 6 |
|---|---|---|---|---|---|---|
| Catalyst System Aging (hrs) | 0.2 | 2.5 | 6.0 | 15.5 | 26.0 | 48.0 |
| Productivity (g/g/hr) | 6570 | 6570 | 4640 | 4610 | 2890 | 2180 |

In this series of experiments it is clear that the time lag between activation of the catalyst system with the alkyl aluminum and use of the catalyst system is critical to gaining advantage of the catalyst productivity for the isospecific catalyst. In the case of this isospecific catalyst system, that time period should be as short as possible, but clearly there is not remarkable deterioration in activity before the expiration of two hours. Also, it may be noted that reasonable, commercially acceptable activity levels remain until about six hours post-activation. We have noted a similar criticality of the post-activation, or digestion, time, yet with the opposite effect for the syndiospecific catalyst systems. With syndiospecific systems, an apparent need for longer digestion, or aging, is necessary to gain benefit in productivity of the catalyst system. This effect is described in copending application, USSN 08/503763, as filed 18 July 1995.

The effect of the choice of agent for activation or digestion was tested by using the same master batch, supported on P-10, and activating with TiBAl, TEAL, and TNOAl. Data obtained in this study are presented below in Table 2.

**Table 2**

| Example # | 7 | 8 | 9 | 10 | 11 |
|---|---|---|---|---|---|
| Catalyst System Aging (days) | -0- | 1 | 2 | 4 | 6 |
| Productivity TiBAl aging (g/g/hr) | 8,100 | 13,500 | 13,500 | 8,900 | 6,250 |
| Productivity TEAl aging (g/g/hr) | 8,000 | 2,200 | -- | -- | -- |
| Productivity TNOAl aging (g/g/hr) | 8,050 | 8,150 | 7,500 | -- | -- |

From these data, it is apparent that TiBAl is a useful agent for activation for the isospecific catalysts and it functions well during the period in which its aged catalyst is functional, but it creates a situation in which the activity peaks quickly and drops off rapidly in a dramatic fashion. In contrast, TEAl attains a fair activity level quickly but drops off precipitously extremely rapidly. A more stable aged or digested catalyst system may be obtained using TNOAl as the agent for digestion. It is apparent that it reaches a fair activity level quickly and maintains it well for an extended period. While the TNOAl activated catalyst system will not be as active as those activated with TiBAl, they will not be as dramatically time-sensitive.

A set of experiments, parallel to Examples 1 - 6, were run using the isospecific catalyst dimethylsilyl bis-2-methyl, 4-phenylindenyl zirconium dichloride, known for producing high molecule weight isotactic poly-α-olefin. The master batch was prepared in a fashion similar to that described in the catalyst preparation section prior to the previous examples. For this master batch, the Me₂Si(2-Me- 4-Ph-Ind)₂ZrCl₂ metallocene was supported on P-10 from Fuji-sylisia. The agent for activation or aging was, again, TiBAl. Results of the aging study are presented below in Table 3.

**Table 3**

| Example # | 12 | 13 | 14 | 15 | 16 |
|---|---|---|---|---|---|
| Catalyst System Aging (days) | -0- | 1 | 2 | 4 | 6 |
| Productivity (g/g/hr) | 11,050 | 15,800 | 15,500 | 16,950 | 17,150 |

From these data it is apparent that, in contrast to the aging or activation of the lower molecular weight-producing catalyst system, the high molecular weight-producing system will reach a reasonable activity level and maintain that high level over time with TiBAl as the agent for digestion or ripening. Again, TiBAl is demonstrated as a good agent for activation over the time in which it is functional with the isospecific catalyst systems; it does however, have a better retention of activity level over time with the high MW-producing systems, those employing 2- and 4- substituted indenyl ligands.

These examples are provided for assistance in understanding this invention and the way in which it works. They are not intended, in any fashion, to limit the invention but are, simply illustrative. Those skilled in the art will recognize, from these representative examples and the entirety of this description, modifications which have not been specifically mentioned but which are intended to be included within this invention as claimed below.

## Claims

1. A process for preparing isotactic poly-alpha olefin of melt flow equal to or less than 8 dg/min comprising the steps of:
A. providing a suitable catalyst system capable of producing isotactic poly-alpha olefin comprising a metallocene-type catalyst, an alumoxane as cocatalyst or catalyst activator, and optionally a catalyst support ;
B. ripening the suitable catalyst system of step A by contacting with an alkyl aluminum for a period of time of from 6 hours to 14 days ;
C. polymerising a suitable monomer using the ripened catalyst system of step B ; and
D. recovering the desired isotactic polyolefin.

2. The process according to claim 1 wherein the poly-alpha olefin is polypropylene, the metallocene-type catalyst is dimethylsilyl bis-2-methyl-4-phenylindenyl zirconium dichloride, the alumoxane is methylalumoxane, the catalyst system is supported on particles comprising silica and the ripening agent is triisobutylaluminum.

3. The process according to claim 1 wherein the metallocene-type catalyst has bridging group between cyclopentadienyl ring-bearing ligands; substituent group pendant to the carbon at the 2- position of both cyclopentadienyl ring-bearing ligands, optionally substituent group pendant to the carbon at the 4- position of both cyclopentadienyl ring-bearing ligands, or combinations thereof; and Group 4 metal atom bonded to both cyclopentadienyl ring-bearing ligands.

4. The process according to claim 3, wherein:
A. the bridging group of the catalyst system comprises silicon; and the 2- position substituent has between one and five carbon atoms, the 4- position substituent, if present, is aromatic and has between five and ten carbon atoms, or combinations thereof;
B. the alumoxane is selected from trimethylalumoxane, triethylalimoxane, or combinations thereof.

5. The process according to claim 4, wherein:
A. the bridging group is dimethyl silyl; the 2- position substituent is methyl, the 4- position substituent, if present, is phenyl, or combinations thereof; and Group 4 metal is zirconium;
B. the alumoxane is trimethylalumoxane; and
C. the catalyst system support is present.

6. The process according to claim 5, wherein use for polymerization occurs within 6 to 12 hours of activation for species substituted with methyl at the 2- position and with phenyl at the 4- position.

7. The process according to claim 6, wherein:
A. the alkyl aluminum used for ripening is selected from trimethyl aluminum, triethyl aluminum, dimethyl aluminum halide, diethyl aluminum halide, triisobutyl aluminum, diisobutyl aluminum halide, or combinations thereof;
B. the polymerization method is selected from gas phase, liquid phase, bulk phase, or high pressure polymerization.

8. The process according to claim 7, wherein catalyst ripening system is accomplished with triisobutyl aluminum.

9. The process according to claim 8, wherein the polymerization temperature is within the range of 50 °C through 70 °C and hydrogen concentration is within the range of zero through 0.1 mole%.

10. The process according to claim 9, wherein the polymerization temperature is within the range of 55 °C through 65 °C and hydrogen concentration is within the range of zero through 0.05 mole%.

11. The process according to claim 10, wherein the polymerization temperature is about 62 °C and hydrogen concentration is within the range of zero through 0.015 mole%.

12. The process according to claim 11, wherein a suitable monomer is propylene, and the desired polymer is isotactic polypropylene.

13. The process according to claim 2, wherein the polymerization method is selected from gas phase, liquid phase, bulk phase, or high pressure polymerization.

14. The process according to claim 13, wherein polymerization occurs within about two hours of catalyst system activation.

15. The process according to claim 2, wherein polymerization temperature is within the range of 50 °C through 70 °C and hydrogen concentration is within the range of zero through 0.1 mole%.

16. The process according to claim15, wherein the polymerization temperature is within the range of 55 °C through 65 °C and hydrogen concentration is within the range of zero through 0.05 mole%.

17. The process according to claim 16, wherein the polymerization temperature is about 62 °C and hydrogen concentration is within the range of zero through 0.015 mole%.

## Patentansprüche

1. Ein Verfahren zur Herstellung isotaktischen Poly-Alphaolefins mit einem Schmelzfluss von gleich oder weniger als 8 dg/min, umfassend die Schritte des:
A. Verschaffens eines geeigneten Katalysatorsystems, das in der Lage ist, isotaktisches Poly-Alphaolefin zu produzieren, das einen Katalysator vom Metallocentyp, ein Alumoxan als Cokatalysator oder Katalysatoraktivator, und optionsweise einen Katalysatorträger umfasst;
B. Ausreifens des geeigneten Katalysatorsystems von Schritt A durch Inkontaktbringen mit einem Alkylaluminium für einen Zeitraum von 6 Stunden bis 14 Tage;
C. Polymerisieren eines geeigneten Monomers unter Verwendung des ausgereiften Katalysatorsystems von Schritt B; und
D. Rückgewinnens des gewünschten isotaktischen Polyolefins.

2. Der Prozess gemäß Anspruch 1, wobei das Poly-Alphaolefin Polypropylen ist, der Katalysator vom Metallocentyp Dimethylsilyl-bis-2-methyl-4-phenylindenylzirkoniumdichlorid ist, das Alumoxan Methylalumoxan ist, das Katalysatorsystem auf Partikeln geträgert ist, die Silika enthalten, und das Reifungsmittel Triisobutylaluminium ist.

3. Der Prozess gemäß Anspruch 1, wobei der Katalysator vom Metallocentyp eine Brückengruppe zwischen cyclopentadienylringtragenden Liganden aufweist; eine an den Kohlenstoff an der 2. Position beider cyclopentadienylringtragender Liganden angehängte Substituentengruppe, optionsweise eine an den Kohlenstoff an der 4. Position beider cyclopentadienylringtragender Liganden angehängte Substituentengruppe, oder Kombinationen davon; und ein Metallatom der Gruppe 4, gebunden an beide cyclopentadienylringtragende Liganden.

4. Der Prozess gemäß Anspruch 3, wobei:
A. die Brückengruppe des Katalysatorsystems Silikon umfasst; und der Substituent der 2. Position zwischen ein und fünf Kohlenstoffatome aufweist, der Substituent der 4. Position, falls vorhanden, aromatisch ist und zwischen fünf und zehn Kohlenstoffatome aufweist, oder Kombinationen davon;
B. das Alumoxan aus Trimethylalumoxan, Triethylalumoxan oder Kombinationen davon gewählt ist.

5. Der Prozess gemäß Anspruch 4, wobei:
A. die Brückengruppe Dimethylsilyl ist; der Substituent der 2. Position Methyl ist, der Substituent der 4. Position, falls vorhanden, Phenyl ist, oder Kombinationen davon; und das Metall der Gruppe 4 Zirkonium ist;
B. das Alumoxan Trimethylalumoxan ist; und
C. der Katalysatorsystemträger vorhanden ist.

6. Der Prozess gemäß Anspruch 5, wobei die Verwendung zur Polymerisation für Arten, die an der 2. Position mit Methyl und an der 4. Position mit Phenyl substituiert sind, innerhalb von 6 bis 12 Stunden der Aktivierung stattfindet.

7. Der Prozess gemäß Anspruch 6, wobei:
A. das zum Ausreifen verwendete Alkylaluminium aus Trimethylaluminium, Triethylaluminium, Dimethylaluminiumhalid, Diethylaluminiumhalid, Triisobutylaluminium, Diisobutylaluminiumhalid oder Kombinationen davon gewählt ist;
B. das Polymerisationsverfahren aus Gasphasen-, Flüssigphasen-, Blockphasen- oder Hochdruckpolymerisation gewählt ist.

8. Das Verfahren gemäß Anspruch 7, wobei das Katalysatorausreifungssystem mit Triisobutylaluminium erzielt wird.

9. Das Verfahren gemäß Anspruch 8, wobei die Polymerisationstemperatur innerhalb des Bereichs von 50°C C bis einschließlich 70°C liegt und die Wasserstoffkonzentration innerhalb des Bereichs von Null bis einschließlich 0,1 Mol% liegt.

10. Das Verfahren gemäß Anspruch 9, wobei die Polymerisationstemperatur innerhalb des Bereichs von 55°C bis einschließlich 65°C liegt und die Wasserstoffkonzentration innerhalb des Bereichs von Null bis einschließlich 0,05 Mol% liegt.

11. Das Verfahren gemäß Anspruch 10, wobei die Polymerisationstemperatur etwa 62°C beträgt und die Wasserstoffkonzentration innerhalb des Bereichs von Null bis einschließlich 0,015 Mol% liegt.

12. Das Verfahren gemäß Anspruch 11, wobei ein geeignetes Monomer Propylen ist und das gewünschte Polymer isotaktisches Polypropylen ist.

13. Das Verfahren gemäß Anspruch 2, wobei das Polymerisationsverfahren aus Gasphasen-, Flüssigphasen-, Blockphasen- oder Hochdruckpolymerisation gewählt ist.

14. Das Verfahren gemäß Anspruch 13, wobei die Polymerisation innerhalb von etwa zwei Stunden der Katalysatorsystemaktivierung stattfindet.

15. Das Verfahren gemäß Anspruch 2, wobei die Polymerisationstemperatur innerhalb des Bereichs von 50°C bis einschließlich 70°C liegt und die Wasserstoffkonzentration innerhalb des Bereichs von Null bis einschließlich 0,1 Mol% liegt.

16. Das Verfahren gemäß Anspruch 15, wobei die Polymerisationstemperatur innerhalb des Bereichs von 55°C bis einschließlich 65°C liegt und die Wasserstoffkonzentration innerhalb des Bereichs von Null bis einschließlich 0,05 Mol% liegt.

17. Das Verfahren gemäß Anspruch 16, wobei die Polymerisationstemperatur etwa 62°C beträgt und die Wasserstoffkonzentration innerhalb des Bereichs von Null bis einschließlich 0,015 Mol% liegt.

## Revendications

1. Procédé pour préparer une poly-alpha oléfine isotactique dont l'indice de fluidité est égal ou inférieur à 8 dg/min, comprenant les étapes consistant à :
A. procurer un système de catalyseur approprié capable de produire une poly-alpha oléfine isotactique comprenant un catalyseur du type du métallocène, un alumoxane à titre de cocatalyseur ou d'activateur du catalyseur, et le cas échéant un support de catalyseur ;
B. soumettre le système de catalyseur approprié de l'étape A à une maturation par mise en contact avec un alkylaluminium pendant un laps de temps de 6 heures à 14 jours ;
C. polymériser un monomère approprié en utilisant le système de catalyseur de l'étape B soumis à une maturation ; et
D. récupérer la polyoléfine isotactique désirée.

2. Procédé selon la revendication 1, dans lequel la poly-alpha oléfine est du polypropylène, le catalyseur du type du métallocène est le dichlorure de diméthylsilyl bis-2-méthyl-4-phénylindényl zirconium, l'alumoxane est le méthylalumoxane, le système de catalyseur est supporté sur des particules comprenant de la silice et l'agent de maturation est le triisobutylaluminium.

3. Procédé selon la revendication 1, dans lequel le catalyseur du type du métallocène possède un groupe faisant pont entre des ligands portant des noyaux cyclopentadiényle ; un groupe faisant office de substituant fixé à l'atome de carbone en position 2 des deux ligands portant des noyaux cyclopentadiényle, le cas échéant, un groupe faisant office de substituant fixé à l'atome de carbone en position 4 des deux ligands portant des noyaux cyclopentadiényle, ou encore leurs combinaisons ; et un atome de métal du groupe 4 lié aux deux ligands portant des noyaux cyclopentadiényle.

4. Procédé selon la revendication 3, dans lequel :
A. le groupe faisant pont du système de catalyseur comprend du silicium ; et le substituant en position 2 possède entre 1 et 5 atomes de carbone, le substituant en position 4, lorsqu'il est présent, est un substituant aromatique qui possède entre 5 et 10 atomes de carbone, ou encore leurs combinaisons ;
B. l'alumoxane est choisi parmi le groupe comprenant du triméthylalumoxane, du triéthylalumoxane ou leurs combinaisons.

5. Procédé selon revendication 4, dans lequel :
A. le groupe faisant pont est un groupe diméthylsilyle ; le substituant en position 2 est un groupe méthyle, le substituant en position 4, lorsqu'il est présent, est un groupe phényle, ou encore leurs combinaisons ; et le métal du groupe 4 est le zirconium ;
B. l'alumoxane est le triméthylalumoxane ; et
C. le support du système de catalyseur est présent.

6. Procédé selon la revendication 5, dans lequel l'utilisation pour la polymérisation a lieu dans un laps de temps de 6 à 12 heures d'activation pour une espèce portant un substituant méthyle en position 2 et un substituant phényle en position 4.

7. Procédé selon la revendication 6, dans lequel :
A. l'alkylaluminium utilisé pour la maturation est choisi parmi le groupe comprenant du triméthylaluminium, du triéthylaluminium, un halogénure de diméthylaluminium, un halogénure de diéthylaluminium, du triisobutylaluminium, un halogénure de diisobutyl-aluminium ou leurs combinaisons ;
B. le procédé de polymérisation est choisi parmi le groupe comprenant une polymérisation en phase gazeuse, une polymérisation en phase liquide, une polymérisation en masse ou une polymérisation sous haute pression.

8. Procédé selon la revendication 7, dans lequel la maturation du système de catalyseur est mise en oeuvre avec du triisobutylaluminium.

9. Procédé selon la revendication 8, dans lequel la température de polymérisation se situe dans la plage de 50 °C à 70 °C et la concentration d'hydrogène se situe dans la plage de,0 à 0,1 mole %.

10. Procédé selon la revendication 9, dans lequel la température de polymérisation se situe dans la plage de 55 °C à 65 °C et la concentration d'hydrogène se situe dans la plage de 0 à 0,05 mole %.

11. Procédé selon la revendication 10, dans lequel la température de polymérisation s'élève à environ 62 °C et la concentration d'hydrogène se situe dans la plage de 0 à 0,015 mole %.

12. Procédé selon revendication 11, dans lequel un monomère approprié est le propylène et le polymère désiré est du polypropylène isotactique.

13. Procédé selon revendication 2, dans lequel le procédé de polymérisation est choisi parmi le groupe comprenant une polymérisation en phase gazeuse, une polymérisation en phase liquide, une polymérisation en masse ou une polymérisation sous haute pression.

14. Procédé selon revendication 13, dans lequel la polymérisation a lieu dans un laps de temps d'environ deux heures d'activation du système de catalyseur

15. Procédé selon la revendication 2, dans lequel la température de polymérisation se situe dans la plage de 50 °C à 70 °C et la concentration d'hydrogène se situe dans la plage de 0 à 0,1 mole %.

16. Procédé selon la revendication 15, dans lequel la température de polymérisation se situe dans la plage de 55 °C à 65 °C et la concentration d'hydrogène se situe dans la plage de 0 à 0,05 mole %.

17. Procédé selon la revendication 16, dans lequel la température de polymérisation s'élève à environ 62 °C et la concentration d'hydrogène se situe dans la plage de 0 à 0,015 mole %.
